# EUROPÄISCHE PATENTSCHRIFT

(11) **EP 3 096 967 B1**
(45) Veröffentlichungstag und Bekanntmachung des Hinweises auf die Patenterteilung: **25.10.2017**
(21) Anmeldenummer: 15700699.0
(22) Anmeldetag: 19.01.2015
(51) Int. Cl.: B60K 25/02

(54) **ANTRIEBSSTRANG FÜR EINE MOTORBETRIEBENE, MOBILE ARBEITSMASCHINE**
DRIVE TRAIN FOR A MOTOR-DRIVEN, MOBILE WORKING MACHINE
CHAÎNE CINÉMATIQUE POUR MACHINE DE TRAVAIL MOBILE ENTRAÎNÉE PAR MOTEUR

(30) Priorität: 25.01.2014 DE 102014001020; 25.01.2014 DE 202014000679 U
(43) Veröffentlichungstag der Anmeldung: 30.11.2016
(73) Patentinhaber: Kalinowski-Krumm, Ursula, 57482 Wenden (DE); Schulte, Christiane, 58710 Menden (DE)
(72) Erfinder: Kalinowski-Krumm, Ursula, 57482 Wenden (DE); Schulte, Christiane, 58710 Menden (DE)
(74) Vertreter: Haverkamp, Jens
(86) Internationale Anmeldenummer: PCT/EP2015/050908
(87) Internationale Veröffentlichungsnummer: WO 2015/110391

(56) Entgegenhaltungen:
- EP-A1- 1 795 775
- EP-B1- 2 156 071
- CN-A- 101 934 728
- DE-A1- 4 216 703
- DE-U1- 8 218 816
- FR-A1- 2 983 788
- US-A1- 2011 031 053

## Beschreibung

Die Erfindung betrifft einen Antriebsstrang für eine motorbetriebene, mobile Arbeitsmaschine mit den Merkmalen des Oberbegriffs des Anspruchs 1.

Derartige Antriebsstränge werden beispielsweise bei Arbeitsmaschinen, wie sie zur Beseitigung von Öl und anderen, auch extremen Verschmutzungen von Verkehrsflächen bekannt sind, eingesetzt. Kennzeichnend für solche Arbeitsmaschinen ist es, dass die eigentliche Reinigungsvorrichtung und die zugehörige Verfahrenstechnik an und/oder auf einem Trägerfahrzeug, das aus Kostengründen schnell zum Einsatzort gelangen soll (Fahrmodus), montiert sind. Vorbekannt ist eine solche Arbeitsmaschine aus DE 10 2010 027 314 A1. Deshalb verfügen diese Fahrzeuge über einen handelsüblichen Verbrennungsmotor als Antriebsaggregat. Dabei erfolgt die Kraftübertragung in bekannter Weise über eine Kupplung, ein fahrzeugseitiges Getriebe und eine Kardanwelle auf die angetriebenen Achsen der mobilen Arbeitsmaschine, die durchaus auch als Fahrzeug angesprochen werden kann. Ein solcher Antriebsstrang gewährleistet relativ hohe Fahrgeschwindigkeiten. Während des Einsatzes der Reinigungsmaschine (Arbeitsmodus) ist dieser Antriebsstrang allerdings wenig geeignet, für die Fortbewegung der Arbeitsmaschine zu sorgen, da die Reinigungsvorrichtung als Arbeitsverrichtungsaggregat am Fahrzeug zum Durchführen der gewünschten Reinigungstätigkeit üblicherweise nur eine sehr geringe, allerdings konstante Geschwindigkeit erfordert. Deshalb verfügen solche Fahrzeuge über einen so genannten hydraulischen Hydrostat-Antrieb wie er etwa aus DE 39 41 024 A1 bekannt ist.

In zahlreichen Anwendungsfällen umfasst die Arbeitsmaschine weitere für die Arbeitsverrichtung, beispielsweise eine Reinigung notwendige Aggregate mit hohem Stromverbrauch, der nicht von der Lichtmaschine des Fahrzeugs gedeckt werden kann. In solchen Fällen ist auf dem Trägerfahrzeug ein weiterer Stromerzeuger untergebracht. Deshalb bietet es sich an, die erforderliche konstante und langsame Reinigungsgeschwindigkeit des Fahrzeugs mit einem elektrischen Antrieb zu realisieren, wobei dessen Stromversorgung durch den mitgeführten und von dem Verbrennungsmotor angetriebenen Stromerzeuger erfolgt. Ein solches Antriebskonzept unterscheidet sich deutlich von einem elektrischen Hybridantrieb für einen Pkw, dessen Antriebsenergie von einer mitgeführten Batterie erfolgt, wie er in DE 10 2008 040 500 A1 dargestellt ist.

Ein weiterer Lösungsansatz ist in DE 195 27 015 C1 zu finden. In diesem Dokument ist eine Antriebseinheit aus einem Verbrennungsmotor und einem kontinuierlich steuerbaren Verzweigungsgetriebe, das eine stufenlos steuerbare hydrostatische Motor-Pumpe-Einheit und ein Summierungsgetriebe mit anschließenden Bereichsgetrieben umfasst, offenbart. In ähnlicher Weise wird in DE 197 41 510 A1 ein stufenloses Getriebe mit hydrostatischer Leistungsverzweigung beschrieben.

In DE 10 2012 201 141 A1 ist eine mobile Arbeitsmaschine beschrieben, bei der zumindest eine elektrische Maschine mit einem Verbrennungsmotor gekoppelt ist, wobei die elektrische Maschine in Abtriebsrichtung zwischen dem Verbrennungsmotor und dem Getriebe angeordnet ist und die elektrische Maschine über eine Trennkupplung oder Übersetzung mit dem Antriebsstrang gekoppelt ist. Die elektrische Maschine kann mit einem Nebenabtrieb gekoppelt sein.

Die vorgenannten Lösungen haben den Nachteil, dass neben dem fahrzeugseitigen Getriebe weitere Getriebe erforderlich sind bzw. aufwändige Hydrauliksysteme zum alternativen Fahrantrieb benötigt werden. Bei mobilen Arbeitsmaschinen mit definierten Funktionen wie beispielsweise Reinigungsaufgaben, die eine Vielzahl von elektrisch angetrieben Komponenten umfassen und die ohnehin neben der Lichtmaschine über einen weiteren Stromerzeuger verfügen, bietet es sich an, den alternativen Fahrantrieb elektrisch zu realisieren und auf das Hydrauliksystem zu verzichten, was den weiteren Vorteil einer Gewichtsersparnis mit sich bringt.

Aus DE 10 2010 012 667 A1 ist ein Antriebsstrang gemäß dem Oberbegriff des unabhängigen Anspruchs offenbart, der einen Verbrennungsmotor, ein Fahrzeuggetriebe, eine Antriebswelle, einen Stromerzeuger und einen Elektromotor umfasst. Mit der Antriebswelle sind zwei Kupplungen verbunden. Bei dem in diesem Dokument beschriebenen Antriebsstrang handelt es sich um einen seriellen Hybridantrieb.

Aus DE 24 18 250 A1 ist ein weiterer Antriebsstrang für ein Nutzfahrzeug bekannt, der einen Verbrennungsmotor, ein Fahrzeuggetriebe, eine Kardanwelle, einen Stromerzeuger und einen Elektromotor umfasst.

DE 82 18 816 U1 offenbart ein Fahrzeug für ein anbaubares schweres Arbeitsgerät, beispielsweise eine Schneefräse. Bei dem Gegenstand dieses Standes der Technik wird die erste Antriebsteilwelle unmittelbar von dem Motor angetrieben und ist von diesem nur durch eine Hauptkupplung getrennt. An die erste Antriebsteilwelle ist ein Nebenabtrieb angeschlossen. Der Antrieb des Nebenabtriebes mit der Drehzahl des Motors ist beim Gegenstand dieses Standes der Technik wesentlich, da die als Arbeitverrichtungsaggregat dienende Schneeschleuder oder Schneefräse abhängig von der aktuellen Drehzahl des Motors angetrieben werden soll. Mittels eines Hydrostatwandlers kann die geöffnete Trennkupplung überbrückt werden, sodass dieses vorbekannte Fahrzeug über den Hydrostatwandler auch bei geöffneter Trennkupplung bewegt werden kann. Für die Realisierung eines solchen Hydrostatwandlers werden eine Hydrostatpumpe und ein Hydrostatmotor und ein entsprechender Hydraulikkreislauf benötigt.

Ausgehend von dem zuletzt diskutierten Stand der Technik liegt der Erfindung die Aufgabe zu Grunde, einen eingangs genannten Antriebsstrang dergestalt weiterzubilden, dass ein Fahrantrieb der mobilen Arbeitsmaschine bei geöffneter Trennkupplung vereinfacht ausgeführt werden kann, insbesondere auch hinsichtlich einer Beeinflussung der Antriebsdrehzahl.

Gelöst wird diese Aufgabe durch einen Antriebsstrang mit den Merkmalen des Anspruchs 1.

Dieser Antriebsstrang verfügt über einen die geöffnete Trennkupplung überbrückenden Bypass-Kraftfluss, und zwar wenn sowohl die Abtriebskupplung als auch die Antriebskupplung geschlossen sind. Die Antriebskraft, bereitgestellt durch den Fahrzeugmotor, wird sodann von der ersten Antriebsteilwelle über die Abtriebskupplung in den Nebenabtrieb eingeleitet. Durch den Nebenabtrieb sind typischerweise ein oder mehrere Arbeitsverrichtungsaggregate angetrieben, beispielsweise das oder die Reinigungsaggregate, für den Fall, dass es sich bei der mobilen Arbeitsmaschine um eine Reinigungsmaschine handelt. Dabei kann der Fahrzeugmotor, da in dem Modus der Krafteinleitung in den Nebenabtrieb die Trennkupplung geöffnet ist, was den Arbeitsmodus der Arbeitsmaschine definiert, hinsichtlich seiner Drehzahl und der Gangwahl so betrieben werden, wie dieses für den Antrieb des oder der Arbeitsverrichtungsaggregate erforderlich ist. Dabei können das eine oder die mehreren Arbeitsverrichtungsaggregate beispielsweise mechanisch über den Nebenabtrieb bei geschlossener Abtriebskupplung angetrieben sein.

Zum Überbrücken der geöffneten Trennkupplung in diesem Arbeitsmodus der Arbeitsmaschine ist an den Nebenabtrieb ein Bypass-Kraftfluss angeschlossen, der wiederum die Antriebskupplung antreibt, die, wenn geschlossen, die zweite Antriebsteilwelle antreibt. Dabei ist der Bypass-Kraftfluss ausgelegt, um die Antriebskupplung und damit den von ihr angetriebenen zweiten Antriebswellenteil mit einer zur Drehgeschwindigkeit der ersten Antriebsteilwelle unterschiedlichen Drehgeschwindigkeit, insbesondere mit einer erheblich reduzierten anzutreiben. Insofern ist es durch den Bypass-Kraftfluss möglich, die zweite Antriebsteilwelle anzutreiben und die Arbeitsmaschine mit einer Geschwindigkeit fortzubewegen, die unabhängig von der aktuellen Drehgeschwindigkeit der ersten Antriebsteilwelle ist. Somit ist es mit diesem Antriebsstrang möglich, eine mobile Arbeitsmaschine unter Verwendung ein und desselben, dem Motor nachgeschalteten Getriebes in unterschiedlichen Modi zu betreiben. In einem ersten Modus - dem Fahrmodus - ist die Trennkupplung geschlossen, hingegen die Abtriebskupplung und die Antriebskupplung geöffnet. Dieses entspricht dem üblichen Kraftfluss zum Antreiben eines Nutzfahrzeuges. In dem zweiten Modus der mobilen Arbeitsmaschine - dem Arbeitsmodus - ist die Trennkupplung geöffnet und der Fahrantrieb erfolgt über den Bypass-Kraftfluss bei geschlossener Abtriebskupplung und Antriebskupplung. Mit Ausnahme einer Kraftübertragung von der Abtriebskupplung zu der Antriebskupplung werden für einen solchen Antriebsstrang keinerlei zusätzlich Aggregate oder gesonderte Antriebe benötigt, damit die mobile Arbeitsmaschine in den genannten unterschiedlichen Modi fortbewegt werden kann.

Zum Realisieren des Bypass-Kraftflusses und somit des Kraftflusses zwischen der Abtriebskupplung und der Antriebskupplung ist vorgesehen, dass der Kraftfluss von der Abtriebskupplung über den Nebenabtrieb an die Antriebskupplung und dann an die zweite Antriebsteilwelle mechanisch oder mechanisch-hydraulisch erfolgt. Ferner ist vorgesehen, den Kraftfluss über den Nebenabtrieb mittels eines Ausgleichgetriebes an die Antriebskupplung zu übertragen. Ein solches, beispielsweise als Differential ausgebildetes Ausgleichsgetriebe bietet die Möglichkeit einer Einwirkung zum Einstellen einer unterschiedlichen Drehgeschwindigkeit seiner ersten Achswelle gegenüber seiner zweiten Achswelle. Dieses gelingt, wenn die erste Achswelle eines solchen Ausgleichgetriebes von der Abtriebskupplung bzw. dem Nebenabtrieb angetrieben wird und die zweite Achswelle ihr Drehmoment an die Antriebskupplung überträgt. Die zwischen den beiden Achswellen befindliche Steuerwelle, über die bei einem herkömmlichen Einsatz eines solchen Ausgleichsgetriebes die Antriebskraft in das Getriebe eingebracht wird, kann zum Beeinflussen der von der ersten Achswelle auf die zweite Achswelle übertragenen Drehgeschwindigkeit genutzt werden. Diese Beeinflussung kann auf mechanischem Wege beispielsweise durch ein Friktionselement erfolgen, welches hinsichtlich seiner auf die Steuerwelle wirkenden Friktionskraft einstellbar ist. Je stärker die Steuerwelle durch das Friktionselement gebremst ist, je geringer ist die Drehgeschwindigkeit der zweiten, an die Antriebskupplung angeschlossenen Achswelle eines solchen Ausgleichsgetriebes gegenüber der Drehgeschwindigkeit der ersten Achswelle. Anstelle eines hinsichtlich seiner Reibkraft einstellbaren Friktionselementes kann bei einer solchen Ausgestaltung die Steuerwelle auch zum Antrieb eines Arbeitsverrichtungsaggregates genutzt werden, wenn dieses mit gleich bleibendem Drehmoment betrieben werden kann. Anstelle einer Beeinflussung der Steuerwelle durch ein Friktionselement kann auch eine so genannte Visco-Kupplung verwendet werden, um auf die Steuerwelle mit demselben Effekt einzuwirken. Bei einer solchen Kupplung wird auf die Steuerwelle durch Einstellen der Viskosität Einfluss genommen. Ferner können elektrische Bremsen, wie beispielsweise eine Hysteresebremse oder eine Wirbelstrombremse als Friktionselement zur Beeinflussung der Steuerwelle Verwendung finden.

Gemäß einer anderen, nicht erfindungsgemäßen Ausgestaltung zum Übertragen des in den Nebenabtrieb eingebrachten Drehmomentes an die Antriebskupplung und damit auf die zweite Antriebsteilwelle ist vorgesehen, die über die Abtriebskupplung in den Nebenabtrieb eingebrachte mechanische Energie zu wandeln, wobei diese gewandelte Energie sodann zum Übertragen eines Drehmomentes auf die Antriebskupplung eingesetzt wird. Es versteht sich, dass bei einer solchen Ausgestaltung ohne Weiteres Einfluss darauf genommen werden kann, welcher Anteil der gewandelten Energie zum Antreiben der Antriebskupplung und damit der zweiten Antriebsteilwelle verwendet wird. Die mechanische Energie kann beispielsweise in elektrische Energie gewandelt werden. Bei einer solchen Ausgestaltung ist zumindest ein Generator als Stromerzeuger Teil des Nebenabtriebes. Ein Elektromotor treibt sodann die Antriebskupplung an. Eine Wandlung der mechanischen Energie im Nebenabtrieb kann beispielsweise auch in hydraulische Energie vorgenommen werden. Bei einer solchen Ausgestaltung wird durch den Nebenabtrieb eine Hydraulikpumpe angetrieben. Als Motor zum Antreiben der Antriebskupplung dient sodann ein Hydraulikmotor. Besonders zweckmäßig ist bei einer solchen Ausgestaltung, dass die Hydraulikpumpe und der Hydraulikmotor in einem Kompaktaggregat als eine kompakte Baueinheit zusammengefasst sein können.

Derjenige Energieanteil der gewandelten mechanischen Energie, die nicht für den Antrieb der Antriebskupplung und somit für die Fortbewegung der Arbeitsmaschine benötigt wird, dient sodann zum Antreiben des oder der Arbeitsverrichtungsaggregate. Gleiches gilt im umgekehrten Falle.

Während bei der Trennkupplung die Kraftübertragung in Längserstreckung der beiden Antriebsteilwellen erfolgt, handelt es sich bei der Abtriebskupplung und der Antriebskupplung typischerweise um solche, über die eine Drehmomentübertragung in radialer Richtung zur Drehachse der beiden Antriebsteilwellen erfolgt.

Bei der in die beiden Antriebsteilwellen durch die darin eingeschaltete Trennkupplung geteilten Antriebswelle handelt es sich typischerweise um eine Kardanwelle.

Nachfolgend ist die Erfindung anhand eines Ausführungsbeispiels unter Bezugnahme auf die beigefügten Figuren beschrieben. Es zeigen:
- **Fig. 1:**: eine schematisierte Darstellung eines Antriebsstranges nach einem ersten, nicht erfindungsgemäßen Ausführungsbeispiel,
- **Fig. 2:**: eine schematisierte Darstellung eines Antriebsstranges gemäß einem Ausführungsbeispiel der Erfindung,
- **Fig. 3:**: in einer möglichen Ausgestaltung eine zum Teil schematisierte Konstruktion eines erfindungsgemäßen Antriebsstranges als Teil einer mobilen Arbeitsmaschine im Fahrmodus und
- **Fig. 4:**: der Antriebsstrang der Figur 3 in seinem Arbeitsmodus.

Ein Antriebsstrang 1 ist Teil einer im Übrigen nicht näher dargestellten mobilen Arbeitsmaschine. Die Arbeitsmaschine umfasst einen bei dem dargestellten Ausführungsbeispiel als Verbrennungsmotor 2 ausgelegten Antriebsmotor, der über ein Getriebe 3 eine insgesamt mit dem Bezugszeichen 4 gekennzeichnete Antriebswelle antreibt. Bei dem dargestellten Ausführungsbeispiel handelt es sich bei der Antriebswelle 4 um eine Kardanwelle.

In die Antriebswelle 4 ist eine Trennkupplung 5 integriert. Durch die Trennkupplung 5 ist die Antriebswelle 4 in zwei Antriebsteilwellen 6, 7 geteilt. Die Antriebsteilwelle 6 ist diejenige, die an das Getriebe 3 angeschlossen ist. Die zweite Antriebsteilwelle 7 treibt, was in der Figur nur schematisiert dargestellt ist, eine Achse 8 der mobilen Arbeitsmaschine an. Am Ende jeder Achswelle 9, 9.1 der Antriebsachse 8 wird jeweils ein Rad 10, 10.1 angetrieben. Ist die Trennkupplung 5 geschlossen, wird die gesamte Antriebskraft des Verbrennungsmotors 2 unter Zwischenschaltung des Getriebes 3 auf die Antriebsachse 8 übertragen. Die Arbeitsmaschine befindet sich dann ausschließlich im Fahrmodus, in dem keine Arbeitsfunktionen umgesetzt werden. Im Fahrmodus kann die Arbeitsmaschine mit relativ hoher Geschwindigkeit gefahren werden, verglichen mit der Geschwindigkeit, mit der die Arbeitsmaschine gefahren wird, wenn ein oder mehrere Arbeitsfunktionen ausgeübt werden.

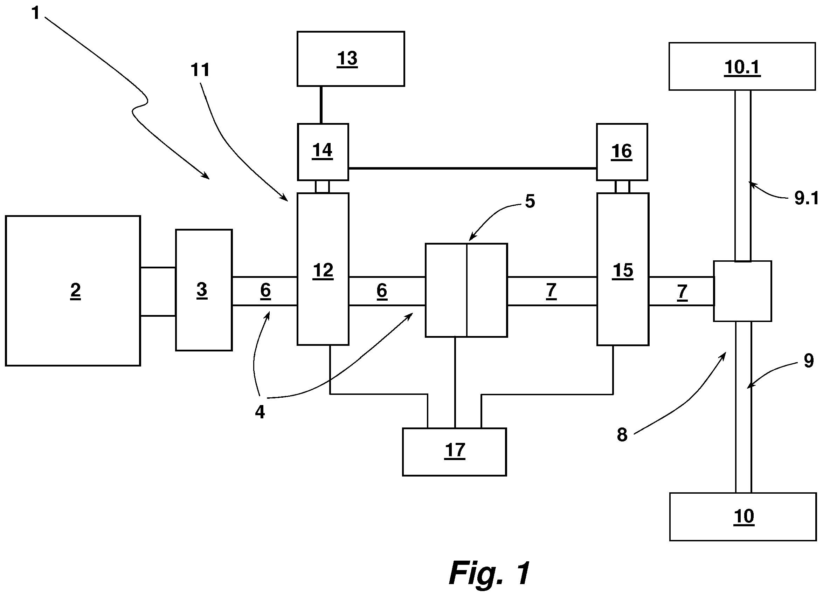

Der Antriebsstrang 1 verfügt über einen Nebenabtrieb 11, der abtriebsseitig an eine Abtriebskupplung 12 angeschlossen ist. Die Abtriebskupplung 12 ist als Schließkupplung ausgeführt und überträgt, wenn geschlossen, die Drehbewegung der getriebenäheren ersten Antriebsteilwelle 6 in den Nebenabtrieb 11. Dieser Nebenabtrieb 11 dient zum Antreiben eines oder mehrerer Arbeitsverrichtungsaggregate 13, beispielsweise Reinigungseinrichtungen, wenn es sich bei dem Arbeitsmaschine um eine Reinigungsmaschine handelt. In Figur 1 ist der Einfachheit halber lediglich ein Arbeitsverrichtungsaggregat 13 eingetragen. Bei dem dargestellten Ausführungsbeispiel ist durch den Nebenabtrieb 11 zudem ein Generator 14 angetrieben, der das eine oder die mehreren Arbeitsverrichtungsaggregate 13 mit dem benötigten Strom versorgt.

Der zweiten Antriebsteilwelle 7 ist eine Antriebskupplung 15 zugeordnet, über die ein Drehmoment auf die zweite Antriebsteilwelle 7 übertragen werden kann, wenn die Antriebskupplung 15 geschlossen ist. Die Antriebskupplung 15 entspricht in ihrem Aufbau der Abtriebskupplung 12. Angetrieben ist die Antriebskupplung 15 bei dem dargestellten Ausführungsbeispiel von einem Elektromotor 16, der den für seinen Betrieb notwendigen Strom von dem Generator 14 erhält. Die Drehgeschwindigkeit des Elektromotors 16 ist einstellbar, so dass dieser den jeweiligen Anforderungen entsprechend mit größerer oder kleinerer Drehzahl betrieben werden kann.

Ist die Trennkupplung 5 geöffnet und sind die Abtriebskupplung 12 sowie die Antriebskupplung 15 geschlossen, kann bei einem Betrieb des Elektromotors 16 die mobile Arbeitsmaschine bewegt werden. Die Fahrgeschwindigkeit ist an die Arbeitsfunktion des oder der dann in Betrieb befindlichen Arbeitverrichtungsaggregate angepasst. Diese ist deutlich geringer als die Geschwindigkeit, mit der die Arbeitsmaschine im Fahrmodus gefahren werden kann. Das von dem Elektromotor 16 erzeugte Drehmoment wird über die dann geschlossene Antriebskupplung 15 in die zweite Antriebsteilwelle 7 eingekoppelt, die sich sodann dreht und die Antriebsachse 8 antreibt. Bei geöffneter Trennkupplung 5 sowie geschlossener Abtriebskupplung 12 und geschlossener Antriebskupplung 15 befindet sich die Arbeitsmaschine in ihrem Arbeitsmodus. In diesem Modus hat ein Betrieb der Arbeitsverrichtungsaggregate 13 Vorrang. Die Arbeitsmaschine wird in Abhängigkeit von der durch das Arbeitsverrichtungsaggregat 13 zu verrichtenden Arbeit durch den Elektromotor 16 angetrieben. Durch den Elektromotor 16 kann die mobile Arbeitsmaschine konstant mit geringer Geschwindigkeit angetrieben werden. Somit ist über den Nebenabtrieb 11, in den das Drehmoment der durch den Verbrennungsmotor 2 angetriebenen ersten Antriebsteilwelle 6 eingekoppelt wird und durch den Rückfluss von Antriebsenergie über den Elektromotor 16 und die Antriebskupplung 15 und die zweite Antriebsteilwelle 7 ein Bypass-Kraftfluss bereitgestellt. Mit diesem ist ein Fahrantrieb der mobilen Arbeitsmaschine möglich, und zwar unabhängig davon, mit welcher Drehzahl und mit welchem Gang die Antriebsenergie des Verbrennungsmotors 2 in die erste Antriebsteilwelle 6 eingekoppelt wird, mithin unabhängig von der Drehgeschwindigkeit der ersten Antriebsteilwelle 6. Es versteht sich, dass bei geschlossener Trennkupplung 5 die Abtriebskupplung 12 sowie die Antriebskupplung 15 geöffnet sind. Sind hingegen die Abtriebskupplung 12 und die Antriebskupplung 15 geschlossen, ist typischerweise die Trennkupplung 5 geöffnet. Die Kupplungen 5 bzw. 12 und 15 sind gemäß einem ENTWEDER/ODER Algorithmus verstellbar. Durchaus kann der Antriebsstrang 1 auch in einer Art und Weise im Arbeitsmodus betrieben werden, in dem die Arbeitsmaschine stillsteht, und zwar entweder da der Elektromotor 16 unbestromt ist oder die Antriebskupplung 15 geöffnet ist, während die Abtriebskupplung 12 geschlossen ist. Wenn im letzteren Fall der Elektromotor 16 bestromt wird, kann dessen Antriebsenergie auch für andere Verrichtungsmaßnahmen genutzt werden. In einem nicht dargestellten Ausführungsbeispiel ist eine Ausgestaltung vorgesehen, bei der keine ENTWEDER/ODER-Stellung der Kupplungen 5 bzw. 12 und 15 vorgesehen ist, sondern bei der die Kupplungen schleifend betrieben werden können, um eine Kraftübertragung in jeden angeschlossenen Teil des Antriebstranges zu ermöglichen.

Eine Steuereinrichtung 17 ist für die Steuerung des Antriebsstranges 1 und insbesondere seiner Kupplungen 5, 12, 15 zuständig. Die Steuereinrichtung 17 kann auch weitere Kontroll- und/oder Überwachungsfunktionen übernehmen, und zwar die Ansteuerung des Elektromotors 16. Zu diesem Zweck ist die Steuereinrichtung 17 in nicht dargestellter Weise mit einer für die Steuerung der Arbeitsverrichtungsaggregate 13 eingesetzten Steuereinrichtung verbunden, um in Abhängigkeit von dem Arbeitsfortschritt die Arbeitsmaschine entsprechend mitzubewegen.

In einem in den Figuren nicht dargestellten Ausführungsbeispiel ist anstelle des Generators 14 als Energiewandler eine Hydraulikpumpe vorgesehen, die das zumindest eine Arbeitsverrichtungsaggregat ebenso antreibt, wie einen Hydraulikmotor, der bei diesem Ausführungsbeispiel den Elektromotor 16 zum Antreiben der Antriebskupplung ersetzt. Bei einer solchen Ausgestaltung kann der Nebenabtrieb einen hydraulisch angetriebenen Stromerzeuger aufweisen, um Strom für elektrische Verbraucher, beispielsweise den einen oder die mehreren Arbeitverrichtungsaggregate bereitzustellen.

Es versteht sich, dass auch kombinierte Kraftflusssysteme eingesetzt werden können, wie beispielsweise eine Hydraulikpumpe und ein Hydraulikmotor, vorzugsweise in einem Kompaktaggregat in einer Baueinheit zusammengefasst, zum Realisieren des Bypass-Kraftflusses und einem ebenfalls durch den Nebenabtrieb angetriebenen Generator zur Stromversorgung des einen oder der mehreren Arbeitsverrichtungsaggregate. Bei einer solchen Ausgestaltung ist es möglich, dass einzelne Arbeitsverrichtungsaggregate mit Strom und andere wiederum hydraulisch angetrieben sein können.

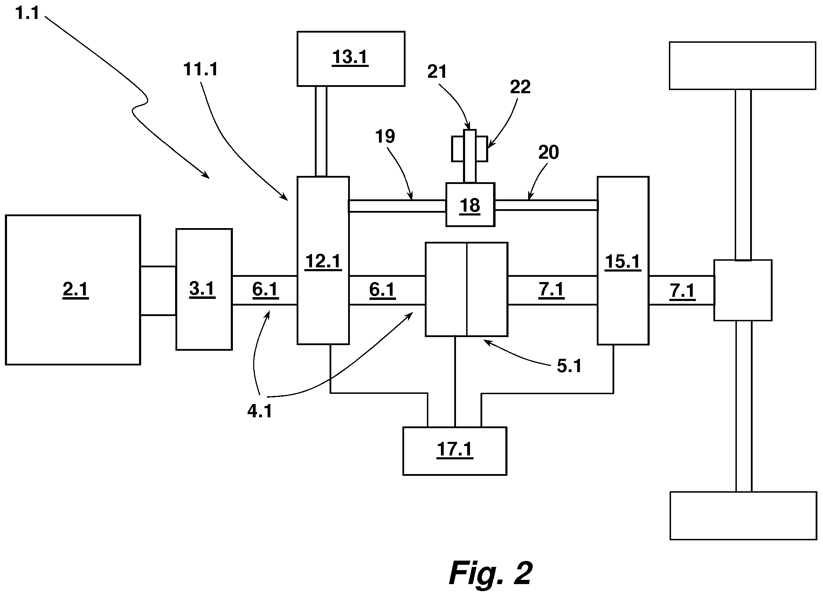

Figur 2 zeigt in einem weiteren Ausführungsbeispiel einen Antriebsstrang 1.1, der vom Prinzip her dem Antriebsstrang 1 der Figur 1 entspricht. Diejenigen Bauteile, die den Bauteilen des Antriebsstranges 1 entsprechen, tragen dasselbe Bezugszeichen ergänzt um ein ".1". Daher gelten die Ausführungen zu dem Antriebsstrang 1 gleichermaßen für den Antriebsstrang 1.1 der Figur 2, soweit nachfolgend nicht anders beschrieben. Der Antriebsstrang 1.1 unterscheidet sich von dem Antriebsstrang 1 dadurch, dass der Bypass-Kraftfluss durch ein Ausgleichsgetriebe 18 ausgeführt ist. Bei einem solchen Ausgleichsgetriebe kann es sich beispielsweise um ein mechanisches Verstellgetriebe oder ein Differentialgetriebe handeln. Das Ausgleichsgetriebe 18 verbindet den Nebenabtrieb 11.1 mit der Antriebskupplung 15.1. Das Ausgleichsgetriebe 18 verbindet mit seinen beiden Achswellen 19, 20 den über die Abtriebskupplung 12.1 angetriebenen Nebenabtrieb 11.1 mit der Antriebskupplung 15.1. Die Achswellen 19, 20 des Ausgleichsgetriebes 18 sind mit dieser Terminologie bezeichnet, da es sich bei diesen Wellen bei einem herkömmlichen Einsatz eines solchen Ausgleichgetriebes um die angetriebenen Wellen handelt. Eingebracht wird die Antriebsenergie bei herkömmlichen Einsätzen derartiger Ausgleichsgetriebe über eine Antriebswelle. Bei dem Einsatz des Ausgleichsgetriebes 18 in dem Ausführungsbeispiel des Antriebsstranges 1.1 der Figur 2 ist eine Steuerwelle 21 vorgesehen, die an der Position der Antriebswelle bei einem üblichen Einsatz eines solchen Ausgleichgetriebes sitzt. Über die Steuerwelle 21 kann die in die an den Nebenabtrieb 11.1 angeschlossene Achswelle 19 eingekoppelte Drehzahl gegenüber der diesbezüglich als Abtriebswelle dienenden Achswelle 20 reduziert werden. Um dieses zu erreichen, wirkt bei dem dargestellten Ausführungsbeispiel auf die Steuerwelle ein Friktionselement 22, das in nicht näher dargestellter Art und Weise hinsichtlich seiner auf die Steuerwelle 21 wirkende Friktionskraft (Bremskraft) einstellbar ist. Je höher die durch das Friktionselement 22 auf die Steuerwelle 21 wirkenden Bremskraft ist, desto geringer ist die Drehzahl der Achswelle 20 gegenüber derjenigen der angetriebenen Achswelle 19. Durch diese Maßnahme kann die Fahrgeschwindigkeit der mobilen Arbeitsmaschine, wenn im Arbeitsmodus, kontrolliert werden.

Wesentlich ist bei den vorbeschriebenen Ausführungsbeispielen, dass der Fahrantrieb der Arbeitsmaschine, wenn ihr Antriebsstrang 1, 1.1 im Arbeitsmodus ist und somit ein Antrieb über den Bypass-Kraftfluss erfolgt, die Fahrgeschwindigkeit unabhängig von der Drehzahl des Verbrennungsmotors oder der Stellung seines Getriebes 3 eingestellt werden kann. Hierin liegen die besonderen Vorteile des beanspruchten Antriebsstranges. Von besonderem Vorteil ist zudem, dass sich diese Ausgestaltung mit einfachen, insbesondere handelsüblichen Elementen bzw. Aggregaten realisieren lassen.

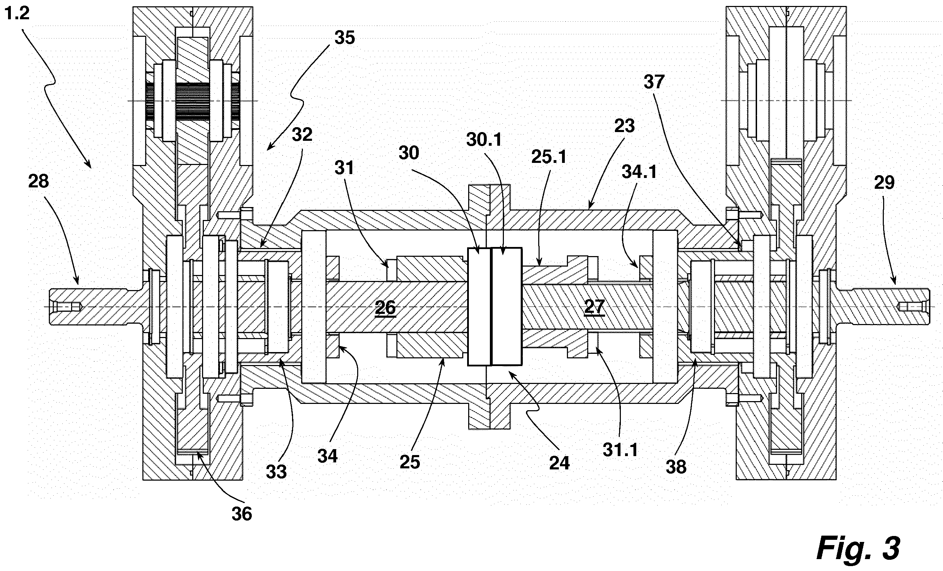

Figur 3 zeigt eine beispielhafte Ausgestaltung eines Antriebsstranges 1.2. Der Antriebsstrang 1.2 entspricht hinsichtlich seiner Funktionalität den bereits vorbeschriebenen Antriebssträngen 1, 1.1. Figur 3 zeigt den Antriebsstrang 1.2 mit dem für seine Funktionalität relevanten Element. Der Übersicht halber ist der Bypass-Kraftfluss, der den Nebenabtrieb mit der Antriebskupplung verbindet, nicht dargestellt.

In einem Wellengehäuse 23 sitzt die Trennkupplung 24, die in Figur 3 in ihrer geschlossenen Stellung gezeigt ist. Die Trennkupplung 24 wird bereitgestellt durch zwei Kupplungshülsen 25, 25.1. Die Kupplungshülse 25 ist in Längsrichtung der ersten, von dem Fahrzeugmotor angetriebenen Antriebsteilwelle 26 verstellbar. Die Kupplungshülse 25.1 ist auf der zweiten Antriebsteilwelle drehmomentschlüssig in längsaxialer Richtung verstellbar. Die erste Antriebswelle 26 ist mit ihrem Anschlussende 28 an ein von dem Antriebsmotor angetriebenen Getriebe bzw. an eine von dem angetriebenen Getriebe kommenden Welle angeschlossen. Die zweite Antriebsteilwelle 27 ist mit ihrem abtriebsseitigen Anschlussende 29 an den weiteren Antriebsstrang des Fahrzeuges, in das der Antriebsstrang 1.2 integriert ist, angeschlossen. Dieser weitere und in Figur 3 nicht dargestellte Antriebsstrang dient dem Zweck, die mobile Arbeitsmaschine zu bewegen. Somit wirkt dieses Anschlussende 29 der zweiten Antriebsteilwelle 27 dem Zweck, auf zumindest ein angetriebenes Rad der mobilen Arbeitsmaschine, typischerweise jedoch auf eine Antriebsachse die notwendige Antriebsenergie zu übertragen.

Die Antriebshülsen 25, 25.1 weisen an ihren zueinander weisenden Seiten jeweils ein Kupplungsteil 30, 30.1 auf, die zur Drehmomentübertragung von der ersten Antriebsteilwelle 26 auf die zweite Antriebsteilwelle 27 drehmomentschlüssig miteinander in Eingriff gestellt sind.

Die Kupplungshülsen 25, 25.1 verfügen an ihren voneinander wegweisenden Stirnseiten über jeweils eine Klauenverzahnung 31, 31.1. Die Klauen der Klauenverzahnung 31 der Kupplungshülse 25 dienen zum Übertragen eines Drehmomentes auf die Abtriebskupplung 32. Die Abtriebskupplung 32 verfügt über eine Hohlwelle 33, die in nicht näher dargestellter Art und Weise drehentkoppelt auf der Antriebsteilwelle 26 gelagert ist. Die zu der Kupplungshülse 25 weisende Stirnseite 34 der Hohlwelle 33 ist mit einer zu der Klauenverzahnung 31 komplementären Klauenverzahnung ausgebildet. Wird bei stillstehender Antriebsteilwelle 26 die Kupplungshülse 25 zum Öffnen der Trennkupplung 24 in Richtung zur Hohlwelle 33 verstellt und somit in längsaxialer Richtung gegenüber der Antriebsteilwelle 26 bewegt und greifen dann die komplementäre Klauenverzahnungen ineinander ein, ist die Abtriebskupplung 32 geschlossen. Wird in dieser Stellung des Antriebsstranges 1.2 die Antriebsteilwelle 26 angetrieben, wird deren Drehbewegung in die Hohlwelle 33 und damit in die Abtriebskupplung 32 eingekoppelt und somit dem Nebenabtrieb 35 zugeleitet. Der Nebenabtrieb 35 ist in der Figur nur unvollständig dargestellt und zeigt weder den Antrieb der einen oder mehreren Arbeitsverrichtungsaggregate noch das oder die Arbeitsverrichtungsaggregate selbst. Der radial wirkende Kraftflussabgriff von der Antriebsteilwelle 26 wird dadurch bewirkt, dass die Hohlwelle 33 an ihrer in radialer Richtung nach außen weisenden Mantelfläche ein Antriebszahnrad 36 trägt.

Die in ihrer geschlossenen Stellung auf die zweite Antriebsteilwelle 27 wirkende Antriebskupplung 37 ist genauso konzipiert wie die Abtriebskupplung 32. Somit erfolgt eine Kraftübertragung über die Antriebskupplung 37 in die Antriebsteilwelle 27, wenn die Kupplungshülse 25.1 mit den Klauen ihrer Klauenverzahnung 31.1 in die komplementäre Klauenverzahnung der Stirnseite 34.1 der Hohlwelle 38 der Antriebskupplung 37 eingreift.

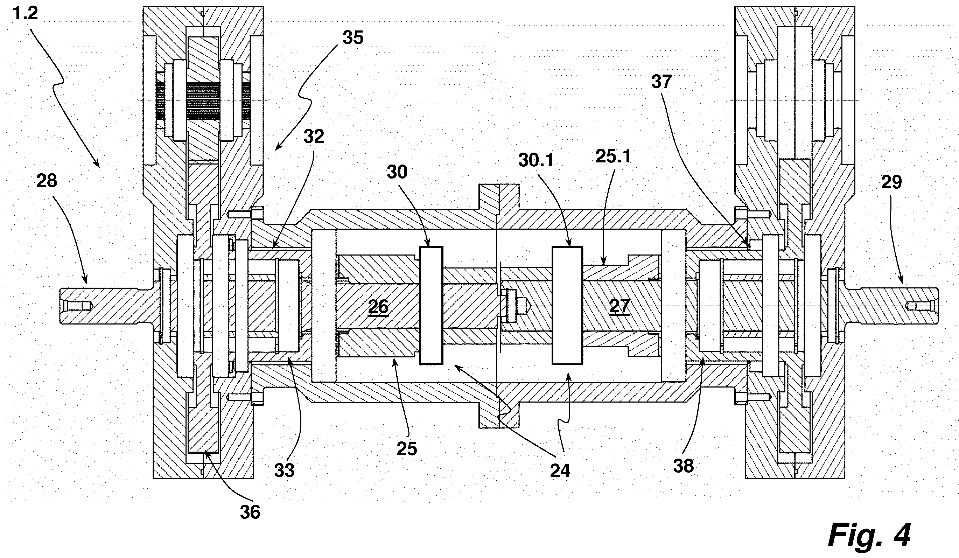

Während Figur 3 den Fahrmodus zum Bewegen der mobilen Arbeitsmaschine des Antriebsstranges 1.2 gezeigt ist, ist in Figur 4 der Arbeitsmodus des Antriebsstranges 1.2 wiedergegeben. Die Trennkupplung 24 ist infolge der Beabstandung der Kupplungsteile 30, 30.1 voneinander geöffnet. Eine Drehmomentübertragung von der Antriebsteilwelle 26 auf die Antriebsteilwelle 27 erfolgt somit nicht über die Trennkupplung 24. Die Kupplungshülsen 25 bzw. 25.1 stehen in drehmomentschlüssiger Verbindung mit der jeweiligen Hohlwelle 33 bzw. 38 der Antriebskupplung 32 bzw. der Abtriebskupplung 37. Somit wird die Antriebsenergie des die Antriebsteilwelle 26 antreibenden Motors in den Nebenabtrieb 35 über die Abtriebskupplung 32 eingebracht. Der Bypass-Kraftfluss zwischen dem Nebenabtrieb und der Antriebskupplung 37 ist der Einfachheit halber in den Figuren 3 und 4 nicht gezeigt. Dieser ist jedoch vorhanden und ausgebildet, wie dieses beispielhaft zu den Figuren 1 oder 2 erläutert ist. Über diesen erfolgt im Arbeitsmodus des Antriebsstranges 1.2 der Antrieb zum Fortbewegen der Arbeitsmaschine, so wie dieses in den zuvor beschriebenen Ausführungsbeispielen erläutert ist.

Die Kupplungshülsen 25, 25.1 sind durch einen gemeinsamen Stellaktor angetrieben. Mithin werden diese gleichzeitig aus ihrer in Figur 3 gezeigten Stellung in ihre in Figur 4 gezeigte Stellung und umgekehrt gebracht. Insofern arbeitet dieser Fahrzeugstrang 1.2 hinsichtlich seiner beiden Modi - Fahrmodus und Arbeitsmodus - nach dem ENTWEDER/ODER-Prinzip.

In einer anderen Ausgestaltung ist vorgesehen, dass die Kupplungshülsen unabhängig voneinander bewegt werden können. Bei einer solchen Ausgestaltung ist es möglich, lediglich Antriebsenergie in den Nebenstrang einzukoppeln, wenn die Abtriebskupplung geschlossen, hingegen die Antriebskupplung geöffnet ist. Es versteht sich, dass auch bei einer solchen Ausgestaltung die Trennkupplung durch Verschieben der auf der ersten Antriebsteilwelle erstellbaren Kupplungshülse geöffnet ist. Die drehmomentschlüssige Kupplung der beiden Antriebsteilwellen kann bei einer solchen Ausgestaltung auch durch ein Verschieben der Kupplungshülse über die jeweiligen Enden der beiden Antriebsteilwellen erfolgen. Die Kupplungshülse kann sodann an ihrem von der Abtriebskupplung wegweisenden Ende eine innenseitige Drehmitnahme, beispielsweise in Form von nach innen vorspringenden Leisten aufweisen, die zum Schließen der Trennkupplung über ein komplementär in Drehrichtung umfänglich gestaltetes Kupplungsrad der zweiten Antriebsteilwelle schiebbar ist.

Die Erfindung ist anhand von Ausführungsbeispielen beschrieben worden. Ohne den Umfang der geltenden Ansprüche zu verlassen, ergeben sich für einen Fachmann zahlreiche weitere Möglichkeiten, die Erfindung ausführen zu können.

**Bezugszeichenliste**

| | | | |
|---|---|---|---|
| 1, 1.1, 1.2 | Antriebsstrang | 34, 34.1 | Stirnseite |
| 2 | Verbrennungsmotor | 35 | Nebenabtrieb |
| 3 | Getriebe | 36 | Antriebszahnrad |
| 4 | Antriebswelle | 37 | Antriebskupplung |
| 5 | Trennkupplung | 38 | Hohlwelle |
| 6 | Antriebsteilwelle | | |
| 7 | Antriebsteilwelle | | |
| 8 | Antriebsachse | | |
| 9, 9.1 | Achswelle | | |
| 10, 10.1 | Rad | | |
| 11, 11.1 | Nebenabtrieb | | |
| 12, 12.1 | Abtriebskupplung | | |
| 13 | Arbeitsverrichtungsaggregat | | |
| 14 | Generator | | |
| 15, 15.1 | Antriebskupplung | | |
| 16 | Elektromotor | | |
| 17 | Steuereinrichtung | | |
| 18 | Ausgleichsgetriebe | | |
| 19 | Achswelle | | |
| 20 | Achswelle | | |
| 21 | Steuerwelle | | |
| 22 | Friktionselement | | |
| 23 | Wellengehäuse | | |
| 24 | Trennkupplung | | |
| 25, 25.1 | Kupplungshülse | | |
| 26 | Antriebsteilwelle | | |
| 27 | Antriebsteilwelle | | |
| 28 | Anschlussende | | |
| 29 | Anschlussende | | |
| 30, 30.1 | Kupplungsteil | | |
| 31, 31.1 | Klauenverzahnung | | |
| 32 | Abtriebskupplung | | |
| 33 | Hohlwelle | | |

## Patentansprüche

1. Antriebsstrang für eine motorbetriebene, mobile Arbeitsmaschine, umfassend ein Fahrzeuggetriebe (3), eine angetriebene, eine erste Antriebsteilwelle (6, 26) und eine zweite Antriebsteilwelle (7, 27) aufweisende Antriebswelle (4), welche Antriebsteilwellen (6, 7; 26, 27) über eine Trennkupplung (5, 24) miteinander verbunden sind, sowie eine an die erste Antriebsteilwelle (6, 26) angeschlossene Abtriebskupplung (12, 32) zum Bereitstellen eines Nebenabtriebes (11, 35) zum Antreiben eines oder mehrerer Arbeitsverrichtungsaggregate (13), wobei in einem ersten Betriebsmodus der Arbeitsmaschine bei geschlossener Trennkupplung (5, 24) wenigstens ein Antriebsrad der Arbeitsmaschine antreibbar ist und wobei in einem zweiten Betriebsmodus der Arbeitsmaschine zum Antreiben des Nebenabtriebes (11, 35) die Trennkupplung (5, 24) geöffnet und die Abtriebskupplung (12, 32) geschlossen ist, wobei an die zweite Antriebsteilwelle (7, 27) eine Antriebskupplung (15, 37) angeschlossen ist, durch die, wenn geschlossen, ein Drehmoment auf die zweite Antriebsteilwelle (7, 27) übertragbar ist, wobei die Antriebskupplung (15, 37) das auf die zweite Antriebsteilwelle (7, 27) zu übertragende Drehmoment durch den Nebenabtrieb (11, 35) erhält, so dass im zweiten Betriebsmodus bei geöffneter Trennkupplung (5) und geschlossener Abtriebs- und Antriebskupplung (12, 15, 32, 37) ein über den Nebenabtrieb (11, 35) die geöffnete Trennkupplung (5, 24) überbrückender Bypass-Kraftfluss von der ersten Antriebsteilwelle (6, 26) zur zweiten Antriebsteilwelle (7, 27) möglich ist, wobei der Kraftfluss über den Nebenabtrieb (11) an die zweite Antriebsteilwelle (7) mechanisch oder mechanisch-hydraulisch erfolgt, **dadurch gekennzeichnet, dass** die erste Antriebsteilwelle (6, 26) der Antriebswelle (4) von dem Fahrzeuggetriebe (3) angetrieben ist und dass zwischen der Abtriebskupplung (12) und der Antriebskupplung (15) ein Ausgleichsgetriebe (18) mit zwei Achswellen (19, 20) und einer auf diese Einfluss nehmenden Steuerwelle (21) angeordnet ist, wobei die Abtriebskupplung (12) eine erste Achswelle (19) des Ausgleichsgetriebes (18) antreibt, die zweite Achswelle (20) des Ausgleichsgetriebes (18) die Antriebskupplung (15) antreibt und auf die Steuerwelle (21) ein hinsichtlich seiner Reibung gegenüber der Steuerwelle (21) einstellbares Friktionsglied (22) wirkt.

2. Antriebsstrang nach Anspruch 1, **dadurch gekennzeichnet, dass** über den Nebenabtrieb (11) wenigstens ein Arbeitsverrichtungsaggregat (13) antreibbar ist.

3. Antriebsstrang nach Anspruch 1 oder 2, **dadurch gekennzeichnet, dass** die drei Kupplungen des Antriebsstranges als elektromagnetische Kupplungen ausgeführt sind.

4. Antriebsstrang nach einem der Ansprüche 1 oder 2, **dadurch gekennzeichnet, dass** die drei Kupplungen des Antriebsstranges als pneumatisch oder hydraulisch betätigbare Kupplungen ausgeführt sind.

5. Antriebsstrang nach einem der Ansprüche 1 bis 4, **dadurch gekennzeichnet, dass** die drei Kupplungen durch zwei, auf jeweils einer Antriebsteilwelle (26 bzw. 27) drehmomentschlüssig in Längsrichtung derselben verstellbare Kupplungshülsen (25, 25.1) realisiert sind, die an ihren zueinander gewandten Enden jeweils einen Teil (30, 30.1) der Trennkupplung (24) tragen, über welche beiden zur Drehmomentübertragung komplementär ausgeführten Teile (30, 30.1) bei geschlossener Trennkupplung (24) das Drehmoment von der ersten Antriebsteilwelle (26) auf die zweite Antriebsteilwelle (27) übertragen wird, und die an ihren voneinander wegweisenden Enden das jeweils erste Teil (31, 31.1) der Abtriebs- bzw. Antriebskupplung (32, 37) aufweisen, die zum Übertragen eines Drehmoments auf das zweite, bei geöffneter Abtriebskupplung (32) drehentkoppelt gegenüber der Antriebsteilwelle (26) komplementäre Teil der Abtriebskupplung (32) bzw. zum Übertragen eines Drehmomentes von dem bei geöffneter Antriebskupplung (37) drehentkoppelt gegenüber der zweiten Antriebsteilwelle (27) komplementären Teil der Antriebskupplung (37) mit jeweils einem zur Drehmomentübertragung komplementären Teil (34, 34.1) einer drehmomententkoppelt gegenüber der jeweiligen Antriebsteilwelle (26, 27) gelagerten Hohlwelle (33, 38) zusammenwirken.

6. Antriebsstrang nach Anspruch 5, **dadurch gekennzeichnet, dass** die Hohlwelle (33) der Abtriebskupplung (32) sowie diejenige der Antriebskupplung (37) außenseitig jeweils ein Zahnrad (36) als Antriebs- bzw. Abtriebselement tragen.

7. Antriebsstrang nach Anspruch 5 oder 6, **dadurch gekennzeichnet, dass** die zusammenwirkenden Teile der Abtriebskupplung (32) und der Antriebskupplung (37) jeweils eine zur Stirnseite (34) des komplementären Kupplungsteils weisende Klauenzahnung (31, 31.1) tragen.

8. Antriebsstrang nach Anspruch 5 oder 6, **dadurch gekennzeichnet, dass** die Kupplungshülsen zum drehmomentschlüssigen Anschluss an die jeweilige Hohlwelle eine Außenzahnung und die Hohlwellen jeweils eine komplementäre Innenzahnung tragen, welche Außenzahnung und Innenzahnung bei geschlossener Abtriebs- bzw. Antriebskupplung miteinander in Eingriff gestellt sind.

9. Antriebsstrang nach einem der Ansprüche 5 bis 8, **dadurch gekennzeichnet, dass** die beiden Kupplungshülsen (25, 25.1) durch ein gemeinsames Stellglied gegenüber der jeweiligen Antriebsteilwelle (26, 27) verstellbar sind.

10. Antriebsstrang nach einem der Ansprüche 5 bis 8, **dadurch gekennzeichnet, dass** die beiden Kupplungshülsen unabhängig voneinander gegenüber der jeweiligen Antriebsteilwelle verstellbar sind.

## Claims

1. Drive train for a motor-driven, mobile working machine, comprising a vehicle transmission (3), a driven drive shaft (4), comprising a first partial drive shaft (6, 26) and a second partial drive shaft (7, 27), said partial drive shafts (6, 7; 26, 27) being connected to one another by means of a disconnecting clutch (5, 24), as well as an output clutch (12, 32) connected to the first partial drive shaft (6, 26) for providing a secondary output (11, 35) for driving one or more work-performing units (13), wherein, in a first operating mode of the working machine, with the disconnecting clutch (5, 24) closed, at least one drive wheel of the working machine can be driven, and wherein, in a second operating mode of the working machine for driving the secondary output (11, 35), the disconnecting clutch (5, 24) is opened and the output clutch (12, 32) is closed, and wherein a drive clutch (15, 37) is connected to the second partial drive shaft (7, 27), by which, when closed, a torque can be transmitted to the second partial drive shaft (7, 27), wherein the drive clutch (15, 37) receives the torque to be transmitted to the second partial drive shaft (7, 27) by means of the secondary output (11, 35), such that, in the second operating mode, with the separating clutch (5) opened and the output clutch and drive clutch (12, 15, 32, 37) closed, a bypass power flow from the first partial drive shaft (6, 26) to the second partial drive shaft (7, 27), bypassing the open disconnecting clutch (5, 24) via the secondary output (11, 35), is possible, wherein the power flow is effected mechanically or mechanically-hydraulically via the secondary output (11) to the second partial drive shaft (7), **characterised in that** the first partial drive shaft (6, 26) of the drive shaft (4) is driven by the vehicle transmission (3), and that, arranged between the output clutch (12) and the drive clutch (15), is a differential gear (18), with two axle shafts (19, 20) and a control shaft (21) exerting influence on them, wherein the output clutch (12) drives a first axle shaft (19) of the differential gear (18), and the second axle shaft (20) of the differential gear (18) drives the drive clutch (15) and a friction element (22) exerts effect on the control shaft (21), adjustable in relation to the control shaft (21) with regard to its friction.

2. Drive train according to claim 1, **characterised in that,** by means of the secondary output (11), at least one working device apparatus (13) can be driven.

3. Drive train according to claim 1 or 2, **characterised in that** the three clutches of the drive train are configured as electromagnetic clutches.

4. Drive train according to claim 1 or 2, **characterised in that** the three clutches of the drive train are configured as pneumatically or hydraulically actuatable clutches.

5. Drive train according to any one of claims 1 to 4, **characterised in that** the three clutches are comprised by two clutch sleeves (25, 25.1), adjustable in each case on a partial drive shaft (26 or 27 respectively), torque-locked in the longitudinal direction, and which in each case, at their ends facing one another, carry a part (30, 30.1) of the disconnecting clutch (24), by means of said both parts (30, 30.1), configured so as to be complementary in transmitting torque, with the disconnecting clutch (24) closed, the torque is transmitted from the first partial drive shaft (26) to the second partial drive shaft (27), and which, at their ends facing away from each other, comprise in each case the first part (31, 31.1) of the output clutch or drive clutch (32, 37) respectively, which, in order to transmit a torque onto the complementary second part of the output clutch (32), torque-decoupled in relation to the partial drive shaft (26) when the output clutch (32) is open, or, respectively, to transmit a torque from the complementary part of the drive clutch (37), torque-decoupled in relation to the second partial drive shaft (27) when the drive clutch (37) is open, interact in each case with a part (34, 34.1), complementary for the torque transmission, of a bearing-mounted hollow shaft (33, 38) which is torque-decoupled in relation to the respective partial drive shaft (26, 27).

6. Drive train according to claim 5, **characterised in that** the hollow shaft (33) of the output clutch (32) and that of the drive clutch (37) carry on the outside in each case a toothed wheel (36) as a drive or output element respectively.

7. Drive train according to claim 5 or 6, **characterised in that** the interacting parts of the output clutch (32) and of the drive clutch (37) in each case carry a claw toothed element (31, 31.1) directed towards the face side (34) of the complementary clutch part.

8. Drive train according to claim 5 or 6, **characterised in that** the clutch sleeves carry an external tooth arrangement for the torque-locked connection to the respective hollow shaft, and the hollow shafts in each case carry a complementary internal tooth arrangement, the said external tooth arrangement and internal tooth arrangement being in engagement with one another when the output clutch and drive clutch respectively are closed.

9. Drive train according to any one of claims 5 to 8, **characterised in that** the two clutch sleeves (25, 25.1) can be adjusted by means of a common actuator element in relation to the respective partial drive shaft (26, 27).

10. Drive train according to any one of claims 5 to 8, **characterised in that** the two clutch sleeves can be adjusted independently of one another in relation to the respective partial drive shaft.

## Revendications

1. Chaîne cinématique pour une machine de travail mobile, entraînée par moteur, comprenant une boîte de transmission (3), un premier arbre partiel de transmission (6, 26) entraîné et un second arbre de transmission (4) constitué d'arbres partiels de transmission (7, 27), lesquels arbres partiels de transmission (6, 7 ; 26, 27) sont couplés les uns aux autres à travers un dispositif de débrayage (5, 24), ainsi qu'un embrayage de sortie (12, 32) couplé au premier arbre partiel de transmission (6, 26) destiné à mettre à disposition un arbre de sortie (11, 35) secondaire destiné à entraîner un ou plusieurs unités de travail (13), au moins une roue d'entraînement de la machine de travail pouvant être entraînée lors d'un premier mode de fonctionnement de la machine de travail, avec le dispositif de débrayage (5, 24) fermé, et le dispositif de débrayage (5, 24) étant ouvert et l'embrayage de sortie (12, 32) étant fermé lors d'un second mode de fonctionnement de la machine de travail afin d'entraîner l'arbre de sortie (11, 35) secondaire, un embrayage d'entraînement (15, 37) étant couplé au second arbre partiel de transmission (7, 27), par lequel, quand il est fermé, un moment de couple peut être transmis sur le second arbre partiel de transmission (7, 27), lequel embrayage d'entraînement (15, 37) réceptionne le moment de couple à transmettre sur le second arbre partiel de transmission (7, 27) à travers l'arbre de sortie secondaire (11, 35), de sorte que, lors du second mode de fonctionnement, avec le dispositif de débrayage (5) ouvert et un embrayage d'entraînement et de sortie (12, 15, 32, 37) fermé, un flux de force en by-pass, qui ponte par l'arbre de sortie (11,35) secondaire le dispositif de débrayage (5, 24) ouvert, peut être instauré depuis le premier arbre partiel de transmission (6, 26) vers le second arbre partiel de transmission (7, 27), le flux de force s'effectuant de manière mécanique ou de manière mécanique-hydraulique, par l'arbre de sortie secondaire (11) vers le second arbre partiel de transmission (7), **caractérisé en ce que** le premier arbre partiel de transmission (6, 26) de l'arbre de transmission (47) est entraîné par la boîte de transmission (3) du véhicule et qu'il est disposé, entre l'embrayage de sortie (12) et l'embrayage d'entraînement (15), une boîte de compensation (18) avec deux arbres d'essieu (19, 20) et un arbre de commande (21) exerçant une influence sur les précédents, l'embrayage de sortie (12) entraînant un premier arbre d'essieu (19) de la boîte de compensation (18), le second arbre d'essieu (20) de la boîte de compensation (18) entraînant l'embrayage d'entraînement (15) et un élément de friction (22), réglable en ce qui concerne sa friction par rapport à l'arbre de commande (21), agissant sur l'arbre de commande (21).

2. Chaîne cinématique selon la revendication 1, **caractérisée en ce que** l'arbre de sortie (11) secondaire permet d'entraîner au moins une unité de travail (13).

3. Chaîne cinématique selon la revendication 1 ou 2, **caractérisée en ce que** les trois embrayages de la chaîne cinématique sont réalisées sous la forme d'embrayages électromagnétiques.

4. Chaîne cinématique selon l'une des revendications 1 ou 2, **caractérisée en ce que** les trois embrayages de la chaîne cinématique sont réalisées sous la forme d'embrayages qui peuvent être actionnés pneumatiquement ou hydrauliquement.

5. Chaîne cinématique selon l'une des revendications 1 à 4, **caractérisée en ce que** les trois embrayages sont réalisés au moyen de deux manchons d'accouplement (25, 25.1), réglables, sur respectivement un arbre partiel de transmission (26, resp. 27), solidaires en rotation dans le sens longitudinal de celui-ci, qui supportent sur leurs extrémités orientées l'une vers l'autre une partie (30, 30.1) du dispositif de débrayage (24), par lequel les deux pièces (30, 30.1), lesquelles sont réalisées de manière complémentaire afin de transmettre le moment de couple, transmettent le moment de couple lorsque le dispositif de débrayage (24) est fermé, depuis le premier arbre partiel de transmission (26) sur le second arbre partiel de transmission (27) et qui présentent sur leurs extrémités orientées dans des directions opposées, respectivement la première pièce (31, 31.1) de l'embrayage d'entraînement ou de sortie (32, 37), qui, pour transmettre un moment de couple sur la seconde pièce complémentaire du dispositif de débrayage (32), lorsque le dispositif de débrayage (32) est ouvert, découplé en rotation par rapport à l'arbre partiel de transmission (26), ou alors pour transmettre un moment de couple sur la pièce complémentaire de l'embrayage d'entraînement (37), lorsque l'embrayage d'entraînement (37) est ouvert, découplé en rotation par rapport au second arbre partiel de transmission (27), agit conjointement avec une pièce complémentaire (34, 34.1) d'un arbre creux (33, 38) logé par rapport à l'arbre partiel respectif de transmission (26, 27) de manière découplée en rotation afin de transmettre un moment de couple.

6. Chaîne cinématique selon la revendication 5, **caractérisée en ce que** l'arbre creux (33) de l'embrayage de sortie (32) ainsi que celui de l'embrayage d'entraînement (37) supportent chacun, sur la face extérieure, une roue dentée (36) faisant office d'élément d'entraînement ou de sortie.

7. Chaîne cinématique selon la revendication 5 ou 6, **caractérisée en ce que** les pièces agissant conjointement de l'embrayage de sortie (32) et de l'embrayage d'entraînement (37) supportent respectivement une denture à enclenchement (31, 31.1) orientée vers la face frontale (34) de la pièce d'embrayage complémentaire.

8. Chaîne cinématique selon la revendication 5 ou 6, **caractérisée en ce que** les manchons d'accouplement supportent, afin de réaliser une jonction solidaire en rotation avec l'arbre creux en question, une denture extérieure, et les arbres creux supportent chacun une denture intérieure complémentaire, lesquelles dentures intérieure et extérieure sont engagées l'une dans l'autre lorsque les embrayages de sortie ou d'entraînement sont fermés.

9. Chaîne cinématique selon l'une des revendications 5 à 8, **caractérisée en ce que** les deux manchons d'accouplement (25, 25.1) sont réglables par rapport à l'arbre partiel de transmission (26, 27) en question par un élément de réglage commun.

10. Chaîne cinématique selon l'une des revendications 5 à 8, **caractérisée en ce que** les deux manchons d'accouplement sont réglables indépendamment l'un de l'autre, par rapport à l'arbre partiel de transmission en question.
